# EUROPÄISCHE PATENTSCHRIFT

(11) **EP 0 457 050 B1**
(45) Veröffentlichungstag und Bekanntmachung des Hinweises auf die Patenterteilung: **09.03.1994**
(21) Anmeldenummer: 91106273.5
(22) Anmeldetag: 19.04.1991
(51) Int. Cl.: F16C 9/04, F16C 7/02

(54) **Lagerung zumindest eines Pleuels auf einem Hubzapfen**
Bearing for connecting rod
Palier pour tête de bielle

(30) Priorität: 15.05.1990 DE 4015536
(43) Veröffentlichungstag der Anmeldung: 21.11.1991
(73) Patentinhaber: AUDI AG, 85045 Ingolstadt (DE)
(72) Erfinder: Motzet, Josef, W-8070 Ingolstadt (DE); Stemmer, Xaver, W-8077 Reichertshofen (DE)

(56) Entgegenhaltungen:
- DE-A- 2 238 384
- US-A- 3 144 786
- US-A- 4 239 303
- PATENT ABSTRACTS OF JAPAN vol. 9, no. 146 (M-389)(1989) 21 Juni 1985,& JP-A-60 23619 (HONDA GIKEN KOGYO K.K) 06 Februar 1985,

## Beschreibung

Die Erfindung betrifft eine Lagerung zumindest eines Pleuels auf zumindest einem Hubzapfen einer Kurbelwelle einer Hubkolbenmaschine, gemäß dem Oberbegriff des Patentanspruches 1.

Eine derartige Lagerung zeigt die US-A-31 44 786 an einer Hubkolben-Brennkraftmaschine mit V-förmig angeordneten Zylinderreihen und je Hubzapfen der Kurbelwelle zwei unmittelbar benachbarter Pleuel. Zur Verringerung der Reibung und des Verschleißes an den radial verlaufenden Anlaufflächen, insbesondere an den unmittelbar aneinander angrenzenden Anlaufflächen der beiden Pleuel, sind diese mit noppenförmigen Vorsprüngen ausgebildet. Die Vorsprünge können alternativ auch durch kugelförmige Wälzelemente gebildet sein.

Ferner sind Lagerungen von Pleueln bekannt (z. B. DE-A-22 38 384 oder JP-A-60-23 619), bei denen die Hubzapfen den Randbereichen zu gekrümmt mit zunehmendem Durchmesser ausgebildet sind, um so eine axiale Anlaufsicherung zu bilden. Derartige Lagerungen sind aber herstellungstechnisch schwer beherrschbar.

Aufgabe der Erfindung ist es, eine Lagerung der gattungsgemäßen Art zu schaffen, die bei einer zuverlässigen axialen Führung reibungs- und verschleißoptimiert und unkompliziert herstellbar ist.

Diese Aufgabe wird erfindungsgemäß mit den kennzeichnenden Merkmalen des Patentanspruches 1 gelöst. Vorteilhafte Weiterbildungen der Erfindung sind den weitern Patentansprüchen entnehmbar.

Erfindungsgemäß wird also vorgeschlagen, daß zumindest eine, bevorzugt jedoch alle Anlaufflächen des bzw. der Pleuel in geringem Maße ballig gestaltet sind. Dadurch wird bei Fluchtungsfehlern schädlichen Verkantungen mit ggf. auftretendem Verschleiß entgegengewirkt, insbesondere bei zwei oder mehreren nebeneinander gelagerten Pleueln an deren unmittelbar benachbarten Anlaufflächen.

Sind die Anlaufflächen, wie bei V-Brennkraftmaschinen an sich bekannt, zueinander versetzt (z. B. bei einer V-Brennkraftmaschine mit 90° Zylinderwinkel und zur Erzielung eines gleichmäßigen Zündabstandes einem Hubzapfenversatz von 30°), so erfahren die Pleuelaugen neben ihrer Schwenkbewegung auch eine radiale Verschiebung zueinander, wodurch die Gefahr eines schabenden Verschleißes besonders ausgeprägt ist. Durch die ballige Ausführung der Anlaufflächen wird dem zuverlässig entgegengewirkt, ohne daß in gewichtserhöhender Weise eine Verbreiterung dieser Anlaufflächen und damit verbunden ein insgesamt stärkeres Pleuelauge erforderlich wird. Für die axiale Führung der Pleuel reicht es aus, wenn jeweils Teilbereiche der Anlaufflächen miteinander in Führungskontakt sind. Ferner wird die Reibung zwischen den Pleueln bzw. zwischen Pleueln und Anlaufbunden an den Hubzapfen vermindert. Als besonders zweckmäßig hat es sich dabei erwiesen, wenn gemäß Patentanspruch 2 der Krümmungsradius der Anlaufflächen von der Lagerbohrung aus radial nach außen zunimmt.

Mit Hinblick auf die gestellte Aufgabe haben sich die Merkmale des Patentanspruches 3 als besonders vorteilhaft erwiesen. Durch die Glattwalzbehandlung wird neben einer Oberfläche von geringer Mikrorauhigkeit eine vorteilhafte Oberflächenverdichtung erzielt, die die Verschleißbeständigkeit an den Anlaufflächen merklich steigert.

Die Ansprüche 4 - 7 beschreiben ein herstellungstechnisch günstiges und präzises Verfahren zum Herstellen der balligen Anlaufflächen, bei dem das Pleuel mit dem großen Pleuelauge auf einer Werkzeugmaschine aufgespannt und über eine Rolle mit einer definierten Andrückkraft die Glattwalzbehandlung durchgeführt wird. Der die Rolle tragende Stempel wird dabei vorzugsweise während des Glattwalzens um eine definierte Kurvenbahn bewegt, um so eine gemäß Anspruch 2 definierte Balligkeit zu erzeugen.

Ein Ausführungsbeispiel der Erfindung ist im folgenden mit weiteren Einzelheiten näher erläutert. Die schematische Zeichnung zeigt in
- **Fig. 1**: die Lagerung zweier Pleuel auf zwei 30° zueinander versetzten Hubzapfen einer Kurbelwelle einer Hubkolbenmaschine, wobei die Pleuel im Längsschnitt dargestellt sind;
- **Fig. 2**: im gleichen Längsschnitt eine Anlauffläche eines Pleuels in vergrößerter Darstellung;
- **Fig. 3**: in stark schematisierter Darstellung eine Vorrichtung zum Durchführen der Glattwalzbehandlung der Anlaufflächen der Pleuel nach den Fig. 1 und 2.

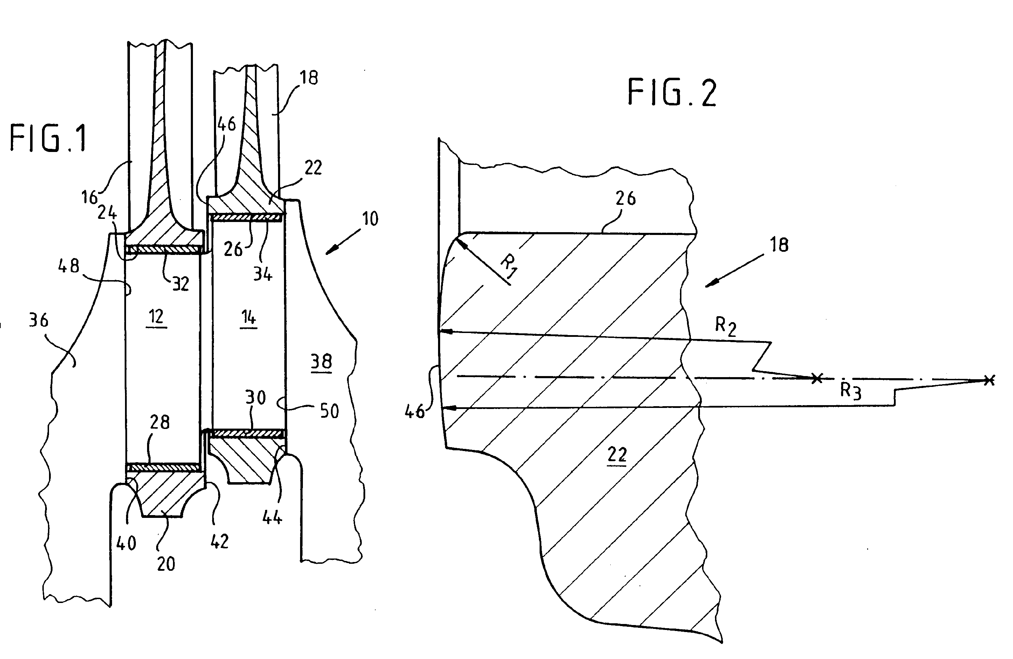

Gemäß Fig. 1 sind auf einer nur abschnittsweise dargestellten Kurbelwelle 10 einer Hubkolbenmaschine bzw. V6-Brennkraftmaschine mit zwei 30° zueinander versetzten Hubzapfen 12,14 zwei Pleuel 16,18 mit ihrem großem Pleuelauge 20,22 schwenkbar gelagert. Die in bekannter Weise in geteilter Ausführung gestalteten Pleuelaugen 20,22 weisen eine Lagerbohrung 24,26 auf, in die Lagerschalen 28,30,32,34 eingesetzt sind. Die unmittelbar aneinander angeformten Hubzapfen 12,14 gehen in die unmittelbar benachbarten Kurbelwangen 36,38 über. Ein jedes Pleuelauge 20,22 ist an beiden Seiten um die Lagerbohrungen 24,26 herum mit radialen Anlaufflächen 40,42 bzw. 44,46 zur axialen Führung versehen, wobei die Anlaufflächen 40,44 mit Anlaufbunden 48,50 an den Kurbelwangen 36,38 und die einander unmittelbar benachbarten Anlaufflächen 42,46 direkt zusammenwirken.

Die Fig. 2 zeigt in vergrößerter Darstellung abschnittsweise das Pleuelauge 22 des Pleuels 18 mit der axialen Anlauffläche 46. Wie ohne weiteres ersichtlich ist, ist diese Anlauffläche ballig gestaltet, wobei deren Krümmungsradien R beginnend mit einem Krümmungsradius R₁ an der Lagerbohrung 26 radial nach außen übergehend in einen größeren Krümmungsradius R₂ und weiter übergehend in einen Krümmungsradius R₃ ständig zunimmt. Durch diese ballige Gestaltung der Anlauffläche 46 bzw. sämtlicher Anlaufflächen 40,42,44,46 wird sowohl eine Reibungsverminderung zu den planen Anlaufbunden 48,50 der Kurbelwangen 36,38 bewirkt, als auch insbesondere eine Schabewirkung zwischen den direkt benachbarten Anlaufflächen 42,46 vermieden. Zur Erzielung einer hohen Oberflächendichte und einer geringen Mikrorauhigkeit sind die Anlaufflächen rolliert bzw. einer Glattwalzbehandlung unterzogen.

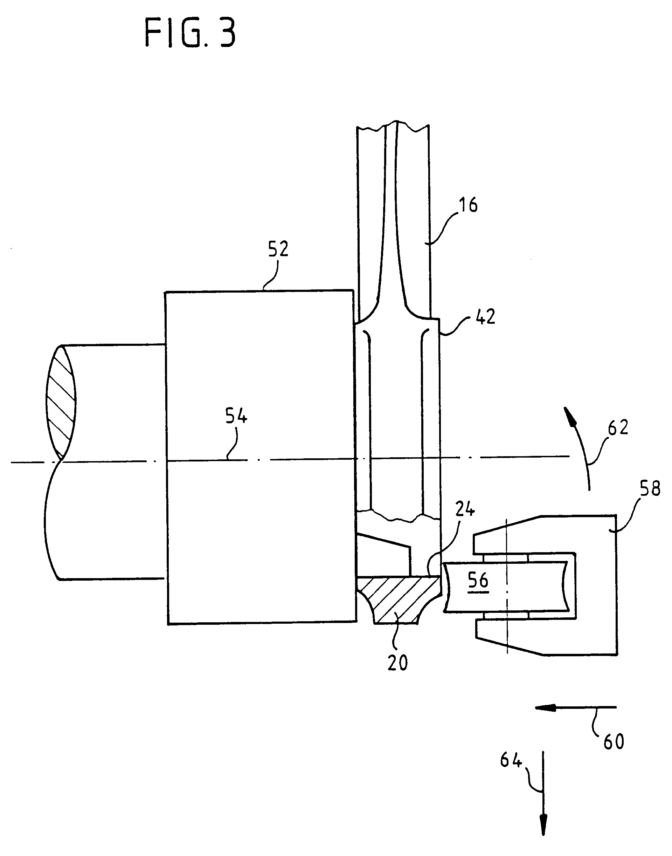

Zur Glattwalzbehandlung wird ein jedes Pleuel (z. B. das Pleuel 16, vgl. Fig. 3) mit dem Pleuelauge 20 auf die Spindel 52 einer nicht näher dargestellten Werkzeugmaschine aufgespannt, wobei die Drehachse 54 der Spindel 52 mit der Mittelachse der Lagerbohrung 24 des Pleuelauges 20 zusammenfällt.

Mittels einer an ihrer Umfangsfläche leicht konkaven Rolle 56, die drehbar in einem über mehrere Achsen verstellbaren Stempel 58 der Werkzeugmaschine aufgenommen ist, wird die Anlauffläche 42 anschließend glattgewalzt, unter gleichzeitiger Herstellung der beschriebenen Balligkeit. Dazu wird der Stempel 58 in Richtung des Pfeiles 60 bei rotierender Spindel 52 gegen die Anlauffläche 42 gedrückt, und dabei entlang einer nicht näher definierten Kurvenbahn (Pfeile 62,64) bewegt. Die Kurvenbahn ist in der Werkzeugmaschine so vorgegeben, daß die in der Fig. 2 beschriebene Balligkeit der Anlaufflächen 40,42,44,46 erzeugt wird.

Der Stempel 58 kann auch mittels eines Kreuzschlittens (nicht dargestellt) in der definierten Kurvenbahn bewegt werden, wobei die Umfangsfläche der Rolle 56 bevorzugt konvex ausgebildet ist.

## Patentansprüche

1. Lagerung zumindest eines Pleuels auf zumindest einem Hubzapfen einer Kurbelwelle einer Hubkolbenmaschine, insbesondere zweier einander unmittelbar benachbarter Pleuel (16,18) auf zwei zueinander versetzten Hubzapfen (12,14), wobei radial verlaufende Anlaufflächen (40,42 bzw. 44,46) der Pleuel mit Anlaufbunden (48,50) der Kurbelwangen (36,38) und ggf. miteinander zur axialen Führung zusammenwirken, dadurch gekennzeichnet, daß zumindest eine Anlauffläche (40,42,44,46) des/der Pleuel (5) (16,18) ballig gestaltet ist.

2. Lagerung nach Anspruch 1, **dadurch gekennzeichnet**, daß der Krümmungsradius R der Anlauffläche (40,42,44,46) von der Lagerbohrung (24,26) aus radial nach außen zunimmt.

3. Lagerung nach den Ansprüchen 1 und 2, **dadurch gekennzeichnet,** daß die Anlauffläche (40,42,44,46) glattgewalzt (rolliert) ist.

4. Verfahren zur Herstellung der Lagerung nach den Ansprüchen 1 - 3, **dadurch gekennzeichnet**, daß das Pleuel in einer Werkzeugmaschine drehbar aufgenommen wird, wobei die Drehachse (54) mit der Mittelachse der Lagerbohrung des Pleuelauges zusammenfällt, und daß mittels eines axial zustellbaren Stempels (58) mit einer drehbar gelagerten Rolle (56) das Glattwalzen bewirkt wird.

5. Verfahren nach Anspruch 4, **dadurch gekennzeichnet**, daß die Rolle (56) eine konkave Umfangsfläche aufweist.

6. Verfahren nach den Ansprüchen 4 und 5, **dadurch gekennzeichnet**, daß der Stempel (58) mit der Rolle (56) um eine im wesentlichen senkrecht zur axialen Zustellung vorgegebene Kurvenbahn verschwenkt wird.

7. Verfahren nach den Ansprüchen 4 und 5, **dadurch gekennzeichnet,** daß der Stempel (58) mit der Rolle (56) um eine im wesentlichen senkrecht zur axialen Zustellung vorgegebene Kurvenbahn über einen Kreuzschlitten verfahren wird.

## Claims

1. Bearing for at least one connecting rod on at least one crankpin of a crankshaft on a reciprocating-piston engine, more particularly for two connecting rods (16, 18) arranged directly adjacent to one another on two crankpins (12, 14) offset relative to one another, with radially extending approach surfaces (40, 42 and 44, 46) of the connecting rods cooperating for axial guidance with approach shoulders (48, 50) of the crank webs (36, 38), and with one another if appropriate, characterised in that at least one approach surface (40, 42, 44, 46) of the connecting rod or rods (16, 18) is barrel-faced.

2. Bearing according to claim 1, characterised in that the radius of curvature R of the approach surface (40, 42, 44, 46) increases radially outwards from the bearing bore (24, 26).

3. Bearing according to claims 1 and 2, characterised in that the approach surface (40, 42, 44, 46) has been planished (roller-burnished).

4. Method for manufacturing the bearing according to claims 1 to 3, characterised in that the connecting rod is held in a machine tool so as to be able to rotate, with the axis of rotation (54) coinciding with the centre axis of the bearing bore in the eye of the connecting rod, and that planishing is performed using an axially fed die (58) with a rotatably mounted roller (56).

5. Method according to claim 4, characterised in that the roller (56) has a concave circumferential surface.

6. Method according to claims 4 and 5, characterised in that the die (58) with its roller (56) is pivoted about a preset cam path substantially perpendicular to the axial feed.

7. Method according to claims 4 and 5, characterised in that the die (58) with its roller (56) is moved via a compound slide about a preset cam path substantially perpendicular to the axial feed.

## Revendications

1. Système de montage d'au moins une bielle sur au moins un maneton d'un vilebrequin d'un moteur à pistons alternatifs, en particulier de deux bielles (16, 18) immédiatement voisines l'une de l'autre sur deux manetons (12, 14) décalés l'un par rapport à l'autre, des surfaces de contact (40, 42; 44, 46) des bielles, dirigées radialement, coopérant avec des collets de contact (48, 50) des bras de manivelle (36, 38) et éventuellement l'une avec l'autre pour le guidage axial, caractérisé en ce qu'au moins une surface de contact (40, 42, 44, 46) de la bielle ou des bielles (16, 18) est réalisée sous forme bombée.

2. Système de montage selon la revendication 1, caractérisé en ce que le rayon de courbure R de la surface de contact (40, 42, 44, 46) croît vers l'extérieur en direction radiale à partir de l'alésage de palier (24, 26).

3. Système de montage selon la revendication 1 ou 2, caractérisé en ce que la surface de contact (40, 42, 44, 46) est polie au laminoir (travaillée par roulage).

4. Procédé de fabrication du système de montage selon l'une quelconque des revendications 1 à 3, caractérisé en ce que la bielle est montée à rotation dans une machine-outil, l'axe de rotation (54) coïncidant avec l'axe central de l'alésage de palier de l'oeil de la tête de bielle, et en ce que le polissage au laminoir est effectué au moyen d'un coulisseau à avance axiale (58) , muni d'un galet (56) monté à rotation.

5. Procédé selon la revendication 4, caractérisé en ce que le galet (56) présente une surface périphérique concave.

6. Procédé selon la revendication 4 ou 5, caractérisé en ce que le coulisseau (58) et le galet (56) effectuent un mouvement oscillant le long d'une courbe qui est prédéfinie dans la direction essentiellement perpendiculaire à leur avance axiale.

7. Procédé selon la revendication 4 ou 5, caractérisé en ce que le coulisseau (58) et le galet (56) sont déplacés, au moyen d'un chariot à deux mouvements rectangulaires, le long d'une courbe qui est prédéfinie dans la direction essentiellement perpendiculaire à leur avance axiale.
